# DEMANDE DE BREVET EUROPEEN

(11) **EP 0 965 424 A1**
(43) Date de publication de la demande: **22.12.1999**
(21) Numéro de dépôt: 98810557.3
(22) Date de dépôt: 18.06.1998
(51) Int. Cl.: B29C 37/00, F26B 13/26, F26B 13/28, B29C 35/16, B29C 47/88

(54) **Procédé et dispositif de séchage d'éléments extrudés**

(71) Demandeur: Nextrom Holding S.A., 1024 Ecublens (CH)
(72) Inventeur: Giachetto, Jean-Charles, 1950 Sion (CH); Geider, Ernst, 1025 St-Sulpice (CH)
(74) Mandataire: BOVARD AG - Patentanwälte

(57) **Abrégé**

Le procédé de séchage d'un élément longiligne extrudé (3) consiste à séparer l'opération de séchage en deux opérations successives, une première opération d'égouttage, effectuée dans un bac d'égouttage (1) suivie d'une opération d'essuyage dans un bac d'essuyage (4), les deux bacs pouvant être combinés.

L'opération d'égouttage est effectuée au moyen d'une pluralité de chaînes de billes (15) entourant l'élément, alors que l'essuyage est obtenu par frottement d'un tampon (43) constitué d'une mousse à pores ouverts sur l'élément. Un essorage dudit tampon de mousse (43) est effectué simultanément.

## Description

La présente invention concerne le séchage d'un élément extrudé, par exemple un fil, un câble, un tube ou autre élément longiligne, qui après avoir été recouvert d'une couche ou d'une gaine isolante lors de son passage dans une tête d'extrusion, puis être passé par un bac de refroidissement à eau, nécessite d'être séché avant d'être recueilli en spires sur une bobine ou sous n'importe quelle autre forme.

Lors de son passage dans le bac de refroidissement, la couche ou gaine extrudée entraîne avec elle une certaine quantité d'eau qu'il s'agit d'éliminer. Cette couche d'eau résiduelle est néfaste pour d'éventuelles mesures effectuées après le passage de l'élément dans le bac de refroidissement, par exemple des mesures géométriques ou de caractéristiques électriques, puisqu'elle peut asperger le dispositif de mesure, de même que fausser la mesure. D'autre part cette couche d'eau résiduelle sur la couche ou gaine extrudée empêche toute impression sur ladite couche ou gaine extrudée. Lorsque l'élément recouvert de sa couche extrudée mouillée est bobiné, l'eau résiduelle ne s'écoule que lentement entre les spires, formant une flaque sous la bobine, l'eau présente sur les spires de fond de bobine ayant de la difficulté à s'échapper en un temps raisonnable. Ultérieurement lors de la reprise de cet élément bobiné humide pour une opération de gainage, avec ou sans assemblage, la présence d'humidité sur l'élément à gainer est extrêmement néfaste puisqu'elle introduit des porosités sous la gaine extrudée ou peut provoquer des gonflements locaux de cette gaine extrudée.

Afin d'éviter ces inconvénients, un sécheur est généralement disposé après le bac de refroidissement à eau. Ce sécheur est généralement un sécheur à air où l'élément recouvert de sa couche extrudée passe à travers un flux d'air vigoureux. Si un tel dispositif peut être efficace pour des éléments de fort diamètre circulant à faible vitesse, sa longueur devient prohibitive dans le cas d'éléments isolés de faible diamètre circulant à haute vitesse, par exemple une vitesse comprise entre 1500 et 2500 m/min, ou supérieure, comme on le trouve sur les lignes de production modernes. D'autres inconvénients des sécheurs à flux d'air conventionnels sont leur forte consommation d'air ainsi que le bruit provoqué par l'échappement d'air à l'air libre.

Un premier but de l'invention est de proposer un procédé de séchage ne rencontrant pas les inconvénients des procédés connus et permettant un séchage efficace, c'est-à-dire ne laissant subsister qu'une couche d'eau superficielle non mesurable ou en tout cas n'entraînant pas les conséquences fâcheuses décrites précédemment. Ledit procédé doit être en outre utilisable pour divers éléments comme des fils ou câbles téléphoniques, des fils ou câbles d'installation, des fils ou câbles d'automobile, des fils ou câbles à fibres optiques, des tubes, etc., le diamètre sur isolation ou gaine de ces divers éléments pouvant aller de quelques dixièmes de millimètres à quelques millimètres. Le procédé doit être efficace sur n'importe quelle matière d'isolation ou de gainage pouvant être utilisée en câblerie. L'efficacité de séchage mentionnée doit être obtenue pour les lignes modernes fonctionnant à haute vitesse, par exemple entre 1500 et 2500 m/min ou plus, pour les plus faibles diamètres mentionnés. Le procédé doit en outre permettre une mise en place aisée de l'élément à sécher, sans nécessiter des réglages particuliers par l'utilisateur selon le diamètre ou le type de l'élément. L'apparition d'une "olive" sur une portion de longueur de l'élément à sécher, soit une augmentation momentanée du diamètre pouvant aller jusqu'à 2 ou 3 fois le diamètre nominal, ne doit pas bloquer la ligne ou causer une rupture de l'élément.

Un deuxième but de l'invention est de proposer un dispositif de séchage possédant les avantages mentionnés précédemment du procédé selon l'invention, étant d'autre part de construction et d'utilisation relativement simples, de faible coût unitaire, de faible coût d'installation et de faible coût de fonctionnement par utilisation de moyens peu gourmands en énergie, peu bruyants et dont le placement dans une ligne de production n'augmente pas les dimensions de celle-ci de manière prohibitive.

Pour ceci, il est proposé un procédé de séchage comprenant les caractéristiques mentionnées à la revendication 1, les revendications dépendantes de celle-ci décrivant des formes d'exécution particulières ou variantes du procédé selon l'invention. De même il est proposé un dispositif d'égouttage, comme décrit dans la revendication 8 et un dispositif d'essuyage comme décrit dans la revendication 14, des formes d'exécution particulières ou variantes étant décrites dans les revendications qui en dépendent. Des dispositions particulières desdits dispositifs sont décrites dans les revendications 26 à 30 alors que les revendications 31 à 33 décrivent une ligne d'extrusion utilisant le procédé selon l'invention et munie d'un ou des dispositifs selon l'invention.

La description qui suit décrit de manière plus détaillée le procédé de séchage selon l'invention ainsi que les dispositifs d'égouttage et d'essuyage selon l'invention, nécessaires pour l'exécution du procédé; d'autres avantages du procédé et des dispositifs y étant mentionnés ou évidents, cette description est à lire en regard du dessin annexé comportant les figures où:
la figure 1 est une coupe longitudinale d'une forme d'exécution préférentielle d'un bac d'égouttage selon l'invention,
la figure 2 est une coupe transversale du bac de la figure 1,
la figure 3 est une coupe longitudinale d'une forme d'exécution préférentielle d'un bac d'essuyage selon l'invention, et
la figure 4 est une coupe transversale du bac de la figure 3.

Dans les procédés de séchage habituels, le séchage est obtenu en une seule opération comme décrite précédemment, alors que dans le procédé selon l'invention, le séchage est obtenu par une première opération d'égouttage grossier, destinée principalement à empêcher la propagation du nuage de gouttelettes qui se déplacent autour de l'élément à sécher tout en évacuant le maximum d'eau entraînée, suivie d'une opération d'essuyage fin, afin d'éliminer la fine pellicule d'eau restant accrochée à la surface de l'élément à sécher.

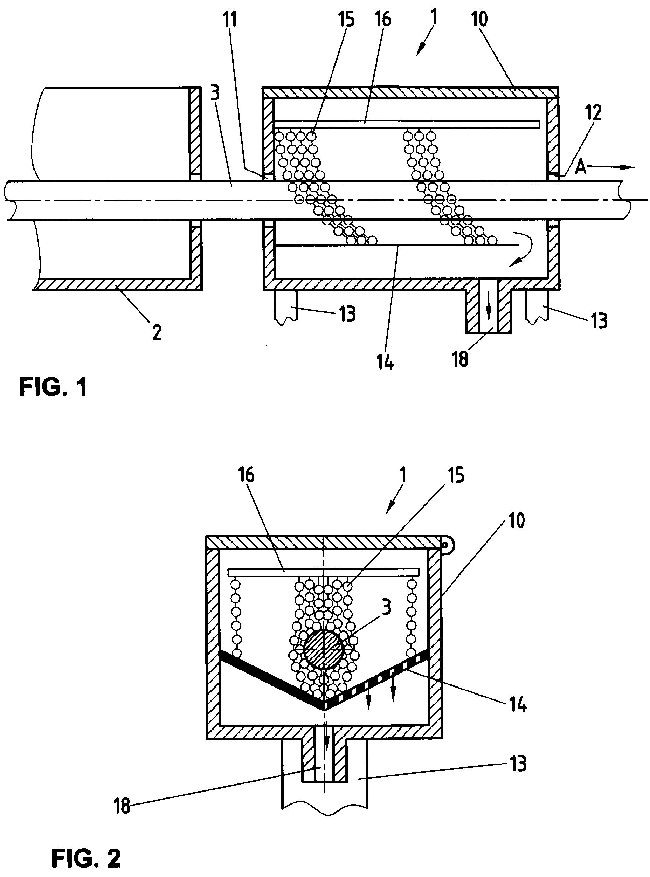

Les figures 1 et 2 montrent deux coupes perpendiculaires d'une forme d'exécution préférentielle d'un bac d'égouttage où s'effectue l'opération d'égouttage mentionnée. Le bac d'égouttage 1 suit immédiatement le bac de refroidissement 2 où l'élément 3 recouvert d'une couche extrudée, entraîné selon la direction de la flèche A, se recouvre d'une pellicule d'eau. Le bac d'égouttage 1 est constitué notamment d'un boîtier 10, de forme essentiellement parallélipipédique, comportant une ouverture d'entrée 11 et une ouverture de sortie 12 de l'élément 3. Des moyens support, schématisés en 13, supportent le bac d'égouttage 1, de telle manière que les centres des ouvertures 11 et 12 soient alignés sur la hauteur de la ligne de production. Une plaque 14, en forme de V, de préférence en tôle métallique, de préférence en acier inoxydable, ou en matériau synthétique, la pointe du V étant dirigée vers le bas du bac d'égouttage 1, est fixée dans la partie inférieure dudit bac. Une extrémité de chacune d'une pluralité de chaînes de billes 15 est fixée à une plaque support 16, elle-même fixée à une portion supérieure du bac d'égouttage 1. Bien que les figures ne représentent que quelques chaînes de billes 15, on doit comprendre que les espaces subsistant sur les figures entre les chaînes de billes les plus extérieures sont aussi remplis de telles chaînes de billes 15. Le nombre et la longueur des chaînes de billes 15 sont tels que les billes remplissent l'essentiel du volume intérieur du bac 1 de manière compacte. L'élément 3 est introduit par l'ouverture d'entrée 11, les billes sont écartées afin de le placer entre elles, puis l'élément 3 est ressorti par l'ouverture de sortie 12. Lors de cette opération, l'opérateur veille à ce que les billes entourent bien l'élément 3 de manière compacte, y compris sur sa face inférieur, sur la plus grande longueur possible, et que les chaînes de billes les plus proches de l'ouverture 11 recouvrent le plus complètement possible cette ouverture.

Lors de la mise en route de la ligne, soit lorsque l'élément 3 est entraîné selon la direction de la flèche A, les chaînes de billes prennent, par frottement contre l'élément 3, une position légèrement incurvée dans la direction d'avance, comme représenté à la figure 1.

Durant le passage de l'élément 3 à travers l'amas de billes, la couche d'eau qui le recouvre est essuyée par frottement contre les billes, l'eau s'écoule entre les billes en contact avec l'élément 3 puis s'écoule le long de la plaque en forme de V 14 pour être recueillie, à l'extrémité de la plaque en forme de V 14, dans la portion inférieure du bac d'égouttage 1 pour être éliminée par une canalisation 18. La plaque en V 14 ne s'étend donc pas jusque vers la paroi du bac munie de l'ouverture 12, afin de laisser un passage pour l'eau.

Pour le bon fonctionnement du bac d'égouttage 1, on veillera à ce que, pour n'importe quel diamètre d'élément 3 à essuyer, la surface périphérique inférieure dudit élément 3 ne soit jamais en contact avec la plaque en V 14 mais qu'un espace suffisant reste sous l'élément 3 pour être rempli de billes afin que de l'eau d'écoulement ne soit pas entraînée par l'élément 3. De part la disposition libre des billes autour de l'élément 3, l'apparition d'une "olive" sur ce dernier ne provoque pas d'augmentation de tension sur l'élément et ne perturbe pas le fonctionnement du bac.

En variante, il est aussi possible que la plaque en V 14 soit perforée, c'est-à-dire qu'elle comprenne une pluralité de trous, répartis sur ses deux faces obliques, au moins dans les régions proches du fond de la concavité, de manière à ce qu'au moins une partie de l'eau recueillie puisse déjà s'échapper vers la portion inférieure du bac d'égouttage au lieu d'être emmenée vers l'extrémité de la plaque 14. A titre d'illustration, sur la figure 2 la portion de gauche de la plaque 14 est représentée selon la première variante non perforée, alors que sur la portion de droite elle est représentée selon la variante avec des trous.

Le bac d'égouttage 1 est de préférence métallique, de préférence en acier inoxydable afin d'éviter la rouille, mais il pourrait tout aussi bien être confectionné en un matériau synthétique. La forme d'exécution décrite ci-dessus mentionne un bac muni d'un couvercle, mais un bac ouvert, c'est-à-dire sans couvercle, est aussi possible. La longueur active du bac d'égouttage 4 est comprise entre 5 cm et 100 cm, de préférence de l'ordre de 20 cm. Les chaînes de billes 15 sont constituées de billes ayant chacune un diamètre compris entre 0.5 et 5 mm, de préférence proche de 3 mm. Elles sont constituées soit à partir de billes confectionnées par emboutissage d'une tôle mince et formage afin de former des billes creuses comportant en deux points opposés d'un diamètre des moyens d'accrochage à la bille suivante, soit de billes sphériques percées et réunies par un fil, comme un collier de perles. De préférence, dans le cas de cette dernière variante, un noeud est effectué entre chaque bille afin d'empêcher le dévidage complet d'une chaîne en cas de rupture d'un fil. D'autres moyens d'accrochage connus entre les billes sont utilisables. Les billes peuvent être métalliques, de préférence inoxydables ou en matériau synthétique ou en un autre matériau comme du verre. Dans le cas où la plaque en V 14 est perforée, les trous de ladite plaque ont un diamètre inférieur à celui des billes de manière à ce que les billes ne passent pas par ces trous.

Un tel bac d'égouttage a des performances de séchage équivalentes à celles d'un bac de séchage conventionnel à air, ceci sans utilisation d'énergie et sans production de bruit. Un tel bac 1 peut donc être utilisé seul, à la place d'un bac de séchage conventionnel, lorsque les exigences de séchage ne sont pas trop élevées.

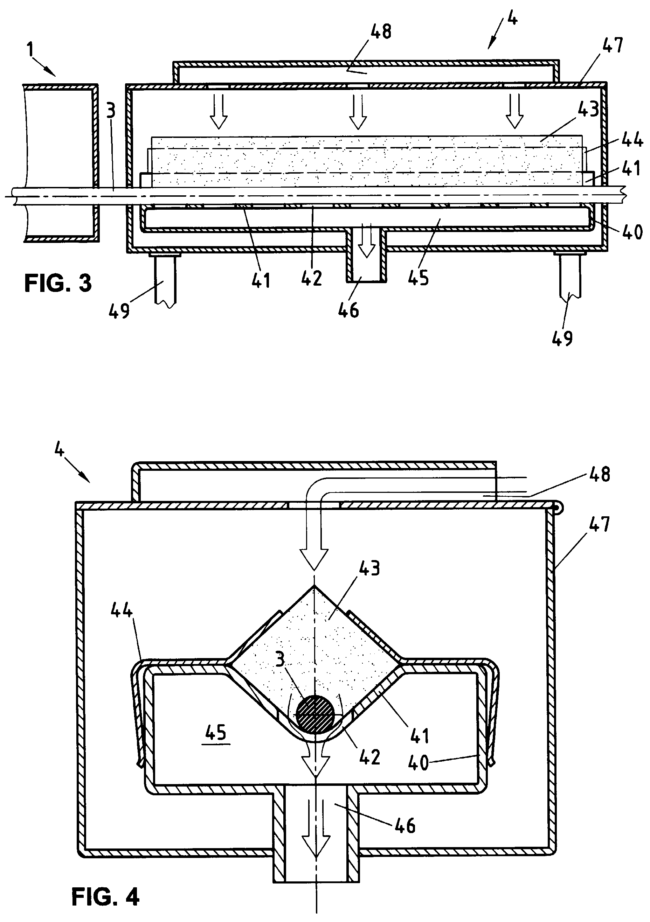

Une forme d'exécution préférentielle d'un bac d'essuyage 4 est représentée schématiquement aux figures 3 et 4 selon deux coupes perpendiculaires. Lorsqu'on désire utiliser un tel bac d'essuyage, celui-ci est disposé immédiatement après le bac d'égouttage 1 décrit plus haut, ou après un bac de séchage traditionnel fonctionnant comme présécheur, et avant l'unité d'entraînement (non représentée) de l'élément 3. Le bac d'essuyage 4 comprend essentiellement un tampon de mousse 43, en appui avec une certaine pression sur une portion de longueur de l'élément 3, et, afin d'essorer ledit tampon de mousse 43, le bac d'essuyage 4 est complété de préférence d'une unité de séchage à aspiration d'air 40, comportant une goulotte 41 en V pour le passage de l'élément 3, le fond du V étant arrondi et comportant une pluralité de trous 42 disposés sur l'arrondi au fond de la goulotte 41. Le tampon de mousse 43 est disposé dans la goulotte 41 et s'étend essentiellement sur toute la longueur de la goulotte 41. Des moyens de fixation 44, par exemple à clips, non complètement représentés sur les figures, permettent de fixer le tampon de mousse 43 dans la goulotte 41. Le bac d'essuyage 4 est généralement complété d'une enceinte 47, entourant complètement le dispositif décrit ci-dessus, munie d'une entrée d'air 48 sur sa portion supérieure et supportée par des moyens de support 49.

Le séchage fin de l'élément 3 est obtenu par essuyage par frottement de la portion du tampon de mousse 43 en contact avec l'élément 3. Pour ceci, et afin d'obtenir un bon essuyage, on choisit de préférence une mousse à pores ouverts ayant une porosité ouverte et fine pouvant varier entre 25 et 250 PPI (Pores Per Inches), de préférence 60 PPI, pour un diamètre de pores pouvant être compris entre 0.1 et 1 mm, de préférence 0.4 mm, de manière à avoir le maximum de points de contact entre la mousse et l'élément 3. De préférence, la mousse est en matériau synthétique.

Lors du passage de l'élément 3 entre le tampon de mousse et le fond de la goulotte 41, le frottement entre la mousse et l'élément produit une usure locale du tampon de mousse. Si dans un premier temps cette usure est favorable, permettant au tampon de mousse 43 de mieux entourer l'élément 3, l'opérateur doit veiller à ce qu'elle ne devienne pas trop élevée, ce qui amènerait à une diminution du frottement exercé par le tampon de mousse 43 sur l'élément 3 et par conséquent à une diminution d'efficacité d'essuyage. Vu que le tampon de mousse 43 est en appui contre les faces inclinées de la goulotte 41, sa section transversale comprend au moins deux arêtes disposées selon le même angle que celui des faces inclinées de la goulotte 41. De préférence, on donne une forme symétrique au tampon de mousse 43, autour de son axe longitudinal, ce qui permet, par une rotation par exemple de 90° ou 180°, selon la forme transversale dudit tampon, autour dudit axe longitudinal, d'utiliser le même tampon à plusieurs reprises en usant successivement diverses portions opposées. Une amélioration de l'effet de séchage peut être obtenue lorsque le tampon de mousse 43 est placé avec une légère contrainte à la traction longitudinale, provoquant un allongement du tampon de l'ordre de 10%.

Vu que les pores ouverts se remplissent d'eau au passage de l'élément 3, il peut être nécessaire d'essorer ledit tampon 43 de manière continue ; dans la forme d'exécution préférentielle décrite des moyens d'essorage, l'aspiration d'air se produisant à travers les trous 42 du fond de la goulotte 41 essore la partie humide du tampon de mousse 43, conservant ce dernier sec afin d'essuyer efficacement l'élément 3 et le débarrasser de toute son humidité résiduelle. De plus, cette aspiration d'air à travers le tampon de mousse 43 permet de plaquer ce dernier contre l'élément 3 à essuyer. Pour assurer le passage du flux d'air d'essorage, représenté par les doubles flèches de la figure 4, la surface supérieure du tampon de mousse 43 doit rester exposée à l'air libre ou à une admission d'air. Les moyens de fixation 44 sont prévus à cet effet et ne recouvrent donc pas, au moins complètement, cette surface supérieure. Le circuit d'air d'essorage passe donc de l'ouverture d'admission d'air 48 de l'enceinte 47, par la surface supérieure du tampon de mousse 43, à travers les pores ouverts dudit tampon, puis par les trous 42 du fond de la goulotte 41 vers la chambre d'aspiration 45 et la conduite d'aspiration 46. Vu que l'aspiration d'air se fait à travers le tampon de mousse 43, celle-ci est peu sonore par rapport à une installation de séchage à air conventionnelle.

Les géométries de positionnement de l'élément 3 relativement au fond de la goulotte 41 et de dimensionnement du fond de la goulotte 41 par rapport aux dimensions de l'élément 3 sont importantes pour obtenir un essuyage efficace dudit élément. L'élément 3 doit être en contact avec le fond de la goulotte 41 et doit être centré relativement à ce fond; ceci est obtenu par l'ajustement en hauteur du bac 4, respectivement du fond de la goulotte 41, afin que l'élément 3 reste en contact avec le fond de la goulotte. La pression appliquée par le tampon de mousse 43 entourant partiellement l'élément 3 peut aider à ce positionnement. D'autre part, le rayon du fond de la goulotte 41 doit être adapté au diamètre de l'élément 3, le rapport "rayon du fond de gorge/diamètre de l'élément" est choisi entre 0.5 et 2.0, de préférence une valeur proche de 1.0. La largeur des trous est de préférence supérieure au diamètre de l'élément 3 afin d'assurer le passage de l'air sur les côtés dudit élément. Vu la souplesse du tampon de mousse 43, le passage d'une "olive" n'augmente pas la force de traction sur l'élément 3 de manière significative et ne perturbe pas le fonctionnement du bac.

De préférence le bac d'essuyage 4, notamment l'unité d'aspiration 40 comportant la goulotte 41, est métallique, de préférence en acier inoxydable, mais ces pièces ou d'autres constituant ledit bac 4 pourraient tout aussi bien être en matériau synthétique. L'unité d'aspiration 40 ou pour le moins la goulotte 41, est montée de préférence de manière amovible dans l'enceinte 47, afin de pouvoir facilement être changée selon le diamètre de l'élément 3. La longueur active du bac d'essuyage 4, respectivement la longueur du tampon de mousse 43, est importante; une trop faible longueur ne procure pas un essuyage efficace alors qu'une trop forte longueur provoque une trop forte résistance de frottement, nécessitant d'augmenter la force de traction sur l'élément 3 de manière prohibitive. Pour les types d'éléments considérés et pour les vitesses de production des lignes modernes, la longueur active du bac d'essuyage 4 est comprise entre 10 cm et 100 cm, de préférence 60 cm. Dans le cas d'un élément 3 de très faible diamètre, ne supportant qu'une très faible contrainte de traction, il est aussi possible, sur une goulotte de longueur déterminée, d'installer un tampon de mousse 43 de plus faible longueur que celle de la goulotte afin de diminuer la force de frottement.

Vu les caractéristiques et performances mentionnées des bacs d'égouttage et d'essuyage décrites, plusieurs configurations d'une ligne de séchage sont envisageables. Pour des performances optimum de séchage, les deux opérations mentionnées peuvent être effectuées dans deux bacs séparés comme décrit ou alors les deux bacs d'égouttage et de séchage peuvent être réunis en un seul bac de séchage combiné, dans lequel les opérations mentionnées d'égouttage et d'essuyage sont effectuées successivement. D'autre part, il est aussi envisageable de remplacer le bac d'égouttage décrit par un bac de séchage conventionnel, à air, ou autre, effectuant un préséchage, suivi d'un bac d'essuyage comme décrit. Cette variante peut être envisagée dans le cas où on dispose déjà d'un bac de séchage conventionnel. La construction en un seul bac effectuant le séchage ou le préséchage de manière traditionnelle suivi d'un essuyage est aussi possible. D'autre part, et comme déjà mentionné, vu les performances du bac d'égouttage, comparables à celles d'un bac de séchage conventionnel, un bac d'égouttage peut être utilisé seul dans le cas où les exigences de séchage sont moins sévères.

## Revendications

1. Procédé de séchage d'un élément longiligne extrudé (3) refroidi dans un bac de refroidissement à eau (2), caractérisé en ce qu'après la sortie du bac de refroidissement à eau (2), l'élément longiligne extrudé (3) subit une première opération de préséchage suivie d'une deuxième opération d'essuyage.

2. Procédé selon la revendication 1, caractérisé en ce que la première opération de préséchage et la deuxième opération d'essuyage sont effectuées dans deux bacs séparés.

3. Procédé selon la revendication 1, caractérisé en ce que la première opération de préséchage et la deuxième opération d'essuyage sont effectuées dans un bac commun.

4. Procédé selon l'une des revendications précédentes, caractérisé en ce que la première opération de préséchage est une opération d'égouttage.

5. Procédé selon la revendication 4, caractérisé en ce que l'opération d'égouttage est obtenue par passage dudit élément longiligne extrudé (3) dans un amas de billes (15) entourant complètement ledit élément (3).

6. Procédé selon l'une des revendications précédentes, caractérisé en ce que la deuxième opération d'essuyage est effectuée par un élément d'essuyage (43) et comprend une opération d'essorage de l'élément d'essuyage.

7. Procédé selon la revendication 6, caractérisé en ce que l'opération d'essorage est obtenue par un flux d'air traversant l'élément d'essuyage.

8. Dispositif d'égouttage (1) d'un élément longiligne extrudé (3) refroidi dans un bac de refroidissement à eau (2),
caractérisé en ce qu'il comprend notamment :
une pluralité de billes réunies en une pluralité de chaînes (15), chacune desdites chaînes étant suspendue par une extrémité à une pièce support (16), les billes entourant complètement et une pluralité d'entre elles étant en contact avec ledit élément longiligne extrudé,
des moyens d'évacuation (14,18) de l'eau récoltée par les billes sur ledit élément longiligne extrudé.

9. Dispositif d'égouttage selon la revendication 8, caractérisé en ce que ladite pièce support (16) est disposée parallèlement au-dessus d'une portion de longueur dudit élément longiligne extrudé (3) et que lesdits moyens d'évacuation de l'eau comprennent notamment une plaque (14) pliée en V, disposée au-dessous de ladite portion de longueur dudit élément longiligne extrudé (3), ledit élément longiligne extrudé étant placé dans la concavité formée par le V de ladite plaque, un espace étant aménagé entre ledit élément longiligne extrudé et le fond et les parois inclinées de ladite concavité, l'autre extrémité de chacune desdites chaînes venant en appui sur ladite plaque (14), l'eau évacuée par les billes sortant par l'extrémité de ladite plaque (14).

10. Dispositif d'égouttage selon l'une des revendications 8 ou 9, caractérisé en ce que le diamètre des billes est compris entre 0.5 et 5 mm, de préférence 3 mm.

11. Dispositif d'égouttage selon la revendication 9, caractérisé en ce que la plaque (14) pliée en forme de V comprend une pluralité de trous répartis sur au moins les portions de ses faces inclinées proches du fond du V.

12. Dispositif d'égouttage selon la revendication 11, caractérisé en ce que le diamètre des trous de la plaque pliée en forme de V (14) est inférieur au diamètre des billes.

13. Dispositif d'égouttage selon l'une des revendications 8 à 12, caractérisé en ce que sa longueur active est comprise entre 5 et 100 cm, étant de préférence de 20 cm.

14. Dispositif d'essuyage (4) d'un élément longiligne extrudé (3), refroidi dans un bac de refroidissement à eau (1) et ayant déjà subi une première opération de préséchage,
caractérisé en ce qu'il comprend notamment:
un élément d'essuyage (43) constitué d'une mousse à pores ouverts, disposé au-dessus et en appui sur une autre portion de longueur de l'élément longiligne extrudé (3).

15. Dispositif d'essuyage selon la revendication 14, caractérisé en ce qu'il comprend en outre une unité d'aspiration d'air (46), aspirant l'air à travers ledit élément d'essuyage (43), afin d'essorer ledit élément d'essuyage (43).

16. Dispositif d'essuyage selon la revendication 15, caractérisé en ce que l'élément d'essuyage (43) est pressé contre l'élément (3) par l'effet de l'aspiration d'air en provenance de ladite unité d'aspiration d'air (46).

17. Dispositif d'essuyage selon l'une des revendications 14 à 16, caractérisé en ce qu'il comprend en outre un élément support (40) comprenant une goulotte (41) disposée longitudinalement au-dessous de ladite autre portion de longueur dudit élément longiligne extrudé (3), la portion de fond de la goulotte comportant une pluralité de trous (42) disposés successivement sur la longueur de ladite goulotte, ledit élément longiligne extrudé étant en contact avec le fond de la goulotte, un élément de fixation (44) dudit élément d'essuyage (43) sur ledit élément support (40), l'air aspiré à travers ledit élément d'essuyage passant par ladite pluralité de trous (42) de la goulotte (41) dudit élément support (40).

18. Dispositif d'essuyage selon la revendication 17, caractérisé en ce que le rayon du fond de la goulotte (41) est adapté au diamètre de l'élément longiligne extrudé (3), le rapport "rayon du fond de la goulotte / diamètre de l'élément longiligne extrudé étant compris entre 0.5 et 2.0, ledit rapport étant de préférence proche de 1.0.

19. Dispositif d'essuyage selon l'une des revendications 17 à 18, caractérisé en ce que la largeur des trous (42) du fond de la goulotte (41) est supérieure au diamètre de l'élément longiligne extrudé (3).

20. Dispositif d'essuyage selon l'une des revendications 14 à 19, caractérisé en ce que ledit élément d'essuyage (43) constitué d'une mousse à pores ouverte possède une porosité comprise entre 25 et 250 PPI (Pores Per Inches), de préférence 60 PPI.

21. Dispositif d'essuyage selon l'une des revendications 14 à 20, caractérisé en ce que le diamètre des pores de la mousse dudit élément d'essuyage (43) est compris entre 0.1 et 1.0 mm, valant de préférence 0.4 mm.

22. Dispositif d'essuyage selon l'une des revendications 17 à 21, caractérisé en ce qu'au moins une portion de la section transversale de l'élément d'essuyage (43) a une forme adaptée à la forme de la section transversale de la goulotte (41).

23. Dispositif d'essuyage selon la revendication 17, caractérisé en ce que les moyens de fixation (44) de l'élément d'essuyage (43) sur l'élément support (40) sont conçus de manière à laisser au moins une portion de la surface de l'élément d'essuyage (43), opposée à celle en contact avec ledit élément longiligne extrudé (3), en contact avec une admission d'air.

24. Dispositif d'essuyage selon l'une des revendications 17 à 23, caractérisé en ce que ledit élément d'essuyage (43) est disposé dans la goulotte (41) de l'élément support (40) avec un allongement de préférence de l'ordre de 10 %.

25. Dispositif d'essuyage selon l'une des revendications 14 à 24, caractérisé en ce que l'élément d'essuyage possède une forme transversale possédant au moins une symétrie autour de l'axe longitudinal dudit élément d'essuyage, permettant au moins une nouvelle utilisation dudit élément d'essuyage sur une autre de ses portions après usure d'une première portion.

26. Dispositif d'essuyage selon l'une des revendications 14 à 25, caractérisé en ce que la longueur de l'élément d'essuyage (43) est comprise entre 10 et 100 cm, de préférence 60 cm.

27. Bac d'égouttage (1), caractérisé en ce qu'il comprend un dispositif d'égouttage selon l'une des revendications 8 à 13.

28. Bac d'essuyage (4), caractérisé en ce qu'il comprend un dispositif d'essuyage selon l'une des revendications 14 à 26.

29. Bac de séchage combiné, caractérisé en ce qu'il comprend un dispositif de préséchage ainsi qu'un dispositif d'essuyage selon l'une des revendications 14 à 26.

30. Bac de séchage combiné selon la revendication 29, caractérisé en ce que le dispositif de préséchage est un dispositif d'égouttage selon l'une des revendications 8 à 13.

31. Ligne d'extrusion d'un élément longiligne extrudé (3) comprenant notamment un bac de refroidissement à eau (2), caractérisée en ce qu'elle comprend un bac d'égouttage (1) selon la revendication 27.

32. Ligne d'extrusion d'un élément longiligne extrudé (3) comprenant notamment un bac de refroidissement à eau (2), caractérisée en ce qu'elle comprend un bac d'égouttage (1) selon la revendication 27, suivi d'un bac d'essuyage (4) selon la revendication 28.

33. Ligne d'extrusion d'un élément longiligne extrudé (3) comprenant notamment un bac de refroidissement à eau (2), caractérisée en ce qu'elle comprend un bac de séchage combiné selon l'une des revendications 29 ou 30.
